# EUROPEAN PATENT APPLICATION

(11) **EP 4 711 656 A1**
(43) Date of publication of application: **18.03.2026**
(21) Application number: 24200010.7
(22) Date of filing: 12.09.2024
(51) Int. Cl.: F16K 39/02

(54) **A VALVE**

(71) Applicant: IMI Hydronic Engineering International SA, 1262 Eysins (CH)
(72) Inventor: OMERZU, Filip, 8250 Brezice (SI); VOLOVEC, Peter, 8258 Kapele (SI)
(74) Representative: Zacco Sweden AB

(57) **Abstract**

A valve (1) comprises a valve plug (2) having a circumferential wall portion (16) which encircles a first guide part (26) and is encircled by a second guide part (28). A first sealing O-ring (18) is provided between the first guide part and the encircling circumferential wall portion. A second O-ring (20) is provided between the second guide part and the encircled circumferential wall portion. The second O-ring has an inactive non-sealing state in which a rear end (24) of the circumferential wall portion is subjected to a lower downstream pressure (P2), and an active sealing state in which the second O-ring provides a seal between the second guide part and the circumferential wall portion and in which the rear end of the circumferential wall portion is subjected to a higher upstream pressure (P1). In a forward movement, when the valve plug passes a predefined intermediate position, the second O-ring is caused to change to its active sealing state and remain so when the valve plug is in said closed position.

## Description

### TECHNICAL FIELD

The present disclosure relates to a valve. In particular, the present disclosure relates to a valve that may be used for controlling liquid flow.

### BACKGROUND ART

Liquid distribution systems, for example for heating, cooling and water supply, are designed to feed a liquid from a source to a consumption point. Depending on the type of hydronic system, the flow requirement is often variable over time and can change with factors like seasonality (e.g. summer or winter), that changes the load from the consumption points, temperature changes of the system liquid, changes in consumption of the system liquid (e.g. for drinking water).

Control valves or multifunctional valves with control parts are frequently used in liquid distribution systems and have a variable opening such that the flow rates can be controlled. There are different designs for these types of valves. Some valves (often referred to as liner valves) have a valve plug which is linearly movable for controlling the flow rate, while other valves (often referred to as ball valves) have a rotatable valve plug for controlling the flow rate.

In linear valves, the valve plug can be moved linearly towards a seat, i.e. towards a closed position, or can be moved in the opposite direction to increase the flow rate. The movement of the valve plug may be accomplished by an operationally connected motorized actuator. To ensure that a valve plug is kept in a closed position, a certain closing force needs to be provided by the actuator. For small valves having small seats, a low closing force is sufficient. However, for larger valves having larger seats, the closing force needs to be higher to ensure that the valve plug stays in the closed position, when so desired. One option for larger valves is therefore to provide larger actuators, or to modify the mechanics in existing actuators (e.g. updating a gearbox in an actuator). However, these options come with quite a big investment. It would therefore be desirable to provide a solution which is less costly but which still results in sufficient closing force, allowing the valve plug to be maintained in the closed position when so desired.

### SUMMARY OF THE INVENTION

In the present disclosure a solution is proposed which involves a valve presented in the independent claim. Some non-limiting exemplary embodiments are presented in the dependent claims.

The solution presented in this disclosure is based on the realization that, instead of modifying existing actuators or manufacturing larger actuators, use may be made of the pressure of the actual liquid that is being controlled, to help maintaining the valve closed.

According to an aspect of this disclosure, there is provided a valve comprising:
- a valve body having an inlet and an outlet,
- a valve seat,
- a valve plug which is linearly movable within the valve body relative to the valve seat to control liquid flow from the inlet to the outlet, wherein the valve plug comprises a circumferential wall portion which has a front end and a rear end, wherein the rear end is trailing the front end in a forward movement of the valve plug, wherein the valve plug is movable between:
   a closed position in which the valve plug is seated against the valve seat such that no liquid, or
   only a leakage liquid, is allowed to flow from the inlet to the outlet, and
   a fully open position,
   wherein forward movements of the valve plug reduce its distance to the valve seat, and
   wherein rearward movements of the valve plug increase its distance to the valve seat, and
   wherein liquid flowing between the inlet and the valve plug has an upstream pressure (P1) and
   liquid flowing between the valve plug and the outlet has a downstream pressure (P2) which is lower than the upstream pressure (P1),
   wherein the valve further comprises:
      - a first guide part and a second guide part, wherein said circumferential wall portion of the valve plug encircles the first guide part and is encircled by the second guide part, wherein the valve plug, including its circumferential wall portion, is linearly movable relative to the guide parts,
      - a first sealing O-ring provided between the first guide part and the encircling circumferential wall portion of the valve plug,
      - a second O-ring provided between the second guide part and the encircled circumferential wall portion of the valve plug,
   wherein the second O-ring has an inactive non-sealing state in which the rear end of the circumferential wall portion is subjected to said downstream pressure (P2), and an active sealing state in which the second O-ring provides a seal between the second guide part and the encircled circumferential wall portion and in which the rear end of the circumferential wall portion is subjected to said upstream pressure (P1),
   wherein the second O-ring is in the inactive non-sealing state in any position of the valve plug between the fully open position and a predefined intermediate position, wherein when the valve plug passes said predefined intermediate position in a forward movement of the valve plug, the second O-ring is caused to change to its active sealing state and remain in said active sealing state when the valve plug is in said closed position.

A technical benefit may include that when controlling the position of the valve plug at positions rearwardly of said intermediate position, any pressure balancing of the plug may allow for convenient actuations in both linear direction. However, when the valve plug passes the predefined intermediate position to change the second O-ring to its active sealing state, there will be an increased contribution to the forwardly directed force in such pressure balancing of the plug due to the higher upstream pressure (P1) now acting on the rear end of the circumferential wall portion of the valve plug. Thus, the applied pressure to the rear end of the circumferential wall portion contributes to the closing force provided by the actuator.

A further technical benefit is that, because the second O-ring is not in its active sealing state all the time, but suitably only intended to become activated when the valve plug is near its closing position for providing the additional closing force, unnecessary friction can be avoided. Thus, in normal control actions when the valve plug is positioned rearwardly of the intermediate position, unnecessary friction from the second O-ring can be avoided because it is then in its inactive non-sealing state.

From the above, it should be understood that forwards movement of the valve plug is when the valve plug is being advanced towards the valve seat, whereas a rearwards movement of the valve plug can be a movement when the valve plug is being retracted away from the seat. In a forward movement of the valve plug, the front end of the circumferential wall portion will be a leading end, and the rear end of the circumferential wall portion will be the trailing end.

The valve may in some examples be a pure control valve. In other examples, however, it may have dual or multiple operational functions, such as including a pressure regulator or and/balancing functionality, wherein a control part of such valves may comprise the valve plug discussed herein.

According to at least some example embodiments, said predefined intermediate position of the valve plug may be located closer to the closed position than the fully open position of the valve plug. By providing said predefined intermediate position closer to the closed position, for the major part of the stroke length of the valve plug, the second O-ring will be in the inactive non-sealing state, thus avoiding unnecessary frictional force to the circumferential wall portion. In this respect, it may be noted that there will still be friction provided by the first O-ring, however, additional friction by the second O-ring may be avoided for a large part of the stroke length.

According to at least some example embodiments, with respect to a full stroke of the valve plug, i.e. from the fully open position to the closed position, the second O-ring may be in said inactive non-sealing state for at least 90% of the full stroke, and in said active sealing state for at most 10 % of the full stroke. Similarly to the previous example, by limiting the active sealing state to at most 10% of the full stroke, unnecessary frictional force to the circumferential wall portion may be avoided for at least 90% of the full stroke.

According to at least some example embodiments, the rear end of the circumferential wall portion may have a larger diameter than the front end of the circumferential wall portion. By having an enlarged diameter at the rear end, the area on which the upstream pressure (P1) acts when the second O-ring is in the active sealing state may be made larger than if the circumferential wall portion would have a constant diameter. This in turn means that more force contribution may be provided, thereby further relieving the burden on an actuator operatively coupled to the valve.

According to at least some example embodiments, a rear area of the circumferential wall portion may be facing radially outwardly and may be located adjacent to the rear end of the circumferential wall portion, wherein said rear area of the circumferential wall portion may have an enlarged diameter, wherein in said active sealing state, the second O-ring may seal against said rear area. By providing a rear area with an enlarged diameter, in a forward movement of the valve plug, the rear area may, near the end of the forward movement, conveniently come into contact with the second O-ring to achieve the active sealing state. However, before the rear area has reached the second O-ring, there may be a gap between the circumferential wall portion and the O-ring, because the area in front of the enlarged diameter rear area has as smaller diameter.

It should be noted that the previous example embodiment is just one example of how the active sealing state may be achieved. In at least some other example embodiments, the second O-ring may instead be provided in such a rear area of the circumferential wall portion, wherein the rear area has an enlarged diameter. In such case, the rear area may suitable be provided with a circumferential groove in which the second O-ring is fitted. In a forward movement of the valve plug, the second O-ring may, near the end of the forward movement, come into contact with a radially inwardly projecting portion of the second guide part (such a radially inwardly projecting portion may suitably be provided at the front end of the second guide part presenting a reduced inner diameter of the second guide part). When the second O-ring comes into contact with the radially inwardly projecting portion of the second guide part, the active sealing state can be obtained.

According to at least some example embodiments, the circumferential wall portion may comprise a tapered area which tapers radially from said rear area in the forwards direction, wherein, in a forward movement of the valve plug, said predefined intermediate position of the valve plug is reached when the tapered area contacts the second O-ring, wherein said active sealing state of the second O-ring is reached when the tapered area has passed by the second O-ring so that the rear area comes into contact with the second O-ring. By providing a tapered area a smooth transition between the inactive non-sealing state and the active sealing state may be achieved.

According to at least some example embodiments, the second guide part may form part of a cap structure within which the circumferential wall portion is movable, wherein the cap structure and a rear side of the first guide part define a volume in which said upstream pressure (P1) is present in the closed state of the valve plug. Hereby, the upstream pressure (P1) will act on a large area to provide a forwardly directed force, which assists well in maintaining the valve plug in the closed position.

According to at least some example embodiments, the first guide part may be provided with a first bore through the first guide part such that a front side and a rear side of the first guide part are in fluid communication with each other. Such a first bore may thus allow the upstream pressure (P1) acting at the front of the plug to also reach the rear end of the circumferential wall portion of the valve plug when the valve plug is in the active sealed state.

According to at least some example embodiments, the valve plug may have a front wall portion arranged forwardly of the first guide part, wherein the front wall portion is circumferentially defined by the circumferential wall portion of the valve plug, wherein a variable volume chamber is present between the front wall portion and the first guide part, wherein the front wall portion is provided with at least one second bore such that a front side and a rear side of the front wall portion are in fluid communication with each other. A technical benefit may include that the second bore helps to reduce the pressure difference on the valve plug during normal controlling operation of the valve plug. For example, less force is required to move the valve plug in the forwards direction as the second bore will allow for the upstream pressure (P1) to be present on the rear side of the front wall portion of the valve plug, during a full or substantially full stroke of the valve plug. The combination of the first bore in the first guide part and the second bore in the front wall portion of the valve plug enables the upstream pressure (P1) to be present at the rear end of the circumferential wall portion when the valve plug is in the closed position.

According to at least some example embodiments, the diameter of said at least one second bore may be greater than the diameter of the first bore. A technical benefit may include that this may prevent downstream pressure (P2) to leak through from the rear side of the guide part to the front side of the guide part when the second O-ring is in the inactive non-sealing state. This is due to there being a bigger restriction in the impulses desired for the upstream pressure (P1).

According to at least some example embodiments, the front wall portion of the valve plug may be provided with at least two second bores that provide fluid communication between the front side and rear side of the front wall portion, wherein the diameter of each one of the second bores is greater than the diameter of the first bore. Analogously, with what has been discussed before, the second bores are beneficial for reducing the pressure difference across the front wall of the valve plug, and their dimensions counteract leaking of downstream pressure (P2) via the first bore (from the rear side of the guide part to the front side of the guide part) when the second O-ring is in the inactive non-sealing state.

According to at least some example embodiments, at least one of the first guide part and the second guide part may be stationary. A technical benefit may include that the number of moving parts may be kept low and still achieve the switching between the inactive non-sealing state and the active sealing state of the second O-ring.

According to at least some example embodiments, the second O-ring may be provided in a circular groove of the second guide part. This allows for a convenient assembling of the valve and handling of the switching between the inactive non-sealing state and the active sealing state.

According to at least some example embodiments, said circular groove may be located adjacent to a front end of the second guide part. Hereby when the valve plug is moved in the forwards direction, it may become aligned with the circular groove just before the valve plug arrives at its closed position. As explained previously, during the forwards movement of the valve plug towards its closed position, a delayed sealing engagement (as provided by the second guide part, the second O-ring and the circumferential wall portion of the valve plug) reduces the amount of friction applied to the valve plug during the forwards movement thereof.

According to at least some example embodiments, wherein said second O-ring comprise an elastomeric material such as rubber or polyurethane, wherein the circumferential wall portion of the valve plug causes an inner perimeter of the second O-ring to expand radially when the valve plug passes said intermediate position in a forward movement. This provides a good sealing engagement when the valve plug is in the closed position.

Generally, all terms used in the claims are to be interpreted according to their ordinary meaning in the technical field, unless explicitly defined otherwise herein. All references to "a/an/the part, portion, element, component, arrangement, device, etc." are to be interpreted openly as referring to at least one instance of the part, portion, element, apparatus, component, arrangement, device, etc., unless explicitly stated otherwise. Further features of, and advantages with, the present inventive concept will become apparent when studying the appended claims and the following description. The skilled person realizes that different features of the present inventive concept may be combined to create embodiments other than those described in the following, without departing from the scope of the present inventive concept.

### BRIEF DESCRIPTION OF THE DRAWINGS

Fig. 1 is a schematic cross-sectional view of a valve according to at least one exemplary embodiment of the present disclosure, wherein the valve plug is illustrated in its fully open position.
Fig. 2 shows the valve in Fig. 1, wherein the valve plug is illustrated at an opening of 50% of fully open.
Fig. 3 shows the valve in Fig. 1, wherein the valve plug is illustrated in its closed position.
Figs. 4-6 show an enlarged view of details in Figs. 1-3, respectively.
Fig. 7 is a schematic cross-sectional view of a valve according to at least another exemplary embodiment of the present disclosure, wherein the valve plug is illustrated in its fully open position.
Fig. 8 shows the valve in Fig. 7, wherein the valve plug is illustrated at an opening of 50% of fully open.
Fig. 9 shows the valve in Fig. 7, wherein the valve plug is illustrated in its closed position.

### DETAILED DESCRIPTION

The present inventive concept will now be described more fully hereinafter with reference to the accompanying drawings, in which certain aspects of the present inventive concept are shown. The present inventive concept may, however, be embodied in many different forms and should not be construed as limited to the embodiments and aspects set forth herein; rather, the embodiments are provided by way of example so that this disclosure will be thorough and complete, and will fully convey the scope of the invention to those skilled in the art. Accordingly, it is to be understood that the present inventive concept is not limited to the embodiments described herein and illustrated in the drawings; rather, the skilled person will recognize that many changes and modifications may be made within the scope of the appended claims. Like reference numerals refer to like elements throughout the description.

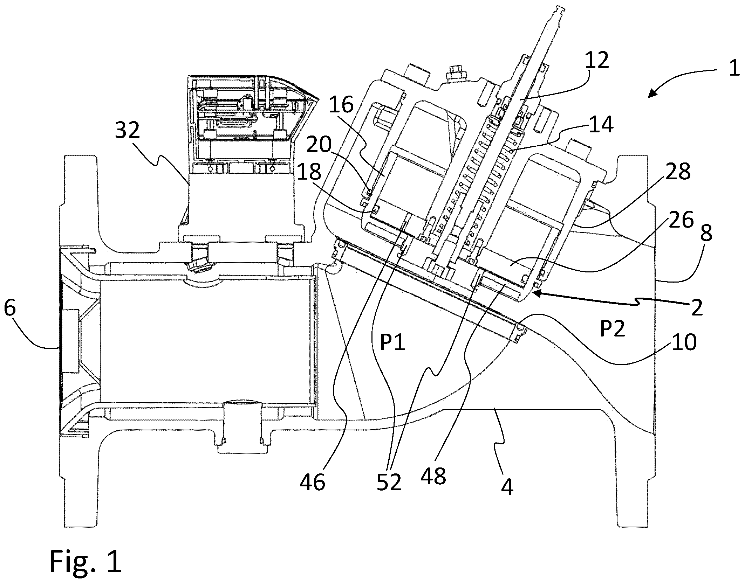

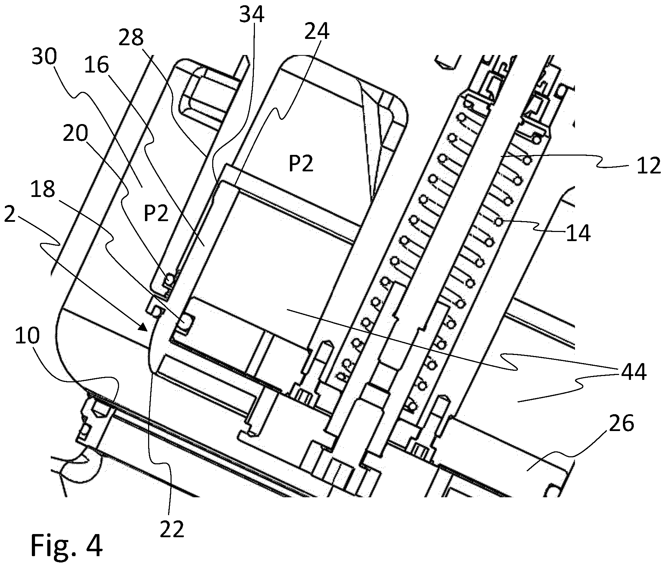

Fig. 1 is a schematic cross-sectional view of a valve 1 according to at least one exemplary embodiment of the present disclosure. The valve comprises a valve plug 2 which is illustrated in its fully open position. A close-up view is shown in Fig. 4.

The valve 1 may suitably be connected to a pipe network of a liquid distribution system such as in a building having a plurality of consumption points.

The valve 1 comprises a valve body 4 having an inlet 6 for receiving a liquid (such as water) into the valve body 4, and an outlet 8 for discharging liquid from the valve body 4. Thus, a flow path extends through the valve body 4, from the inlet 6 to the outlet 8. The outlet 8 is located downstream of the inlet 6, wherein the flow path is configured to guide a liquid from the inlet 6 to the outlet 8. At the inlet 6 and the outlet 8, the valve body 4 may be provided with internal threads to which external threads of pipe sections of the pipe network may be threaded. Alternatively, the valve body 4 may be provided with external threads, to which internal threads of pipe sections may be threaded.

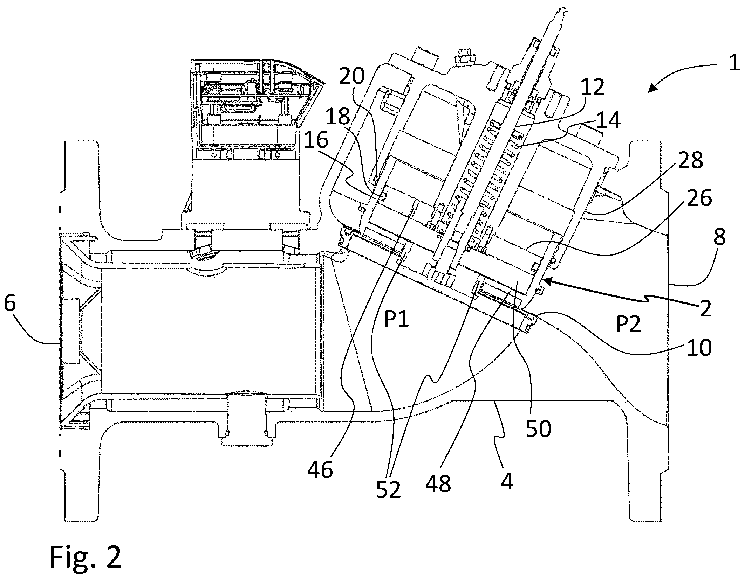

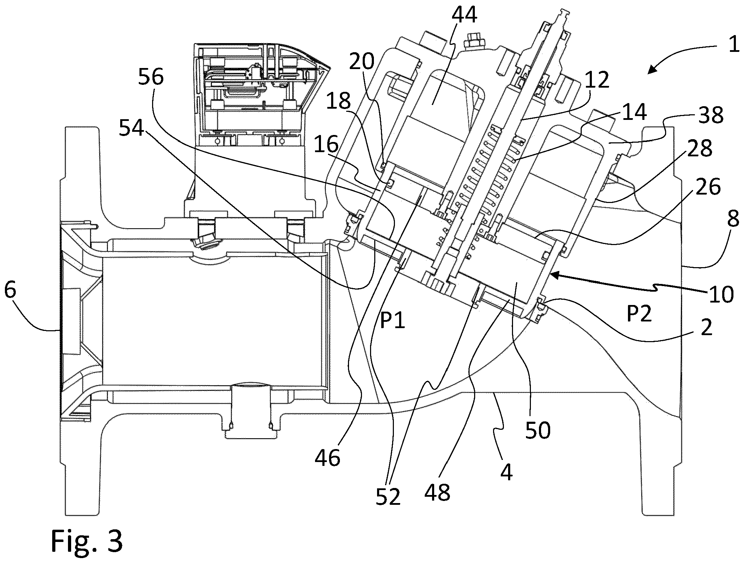

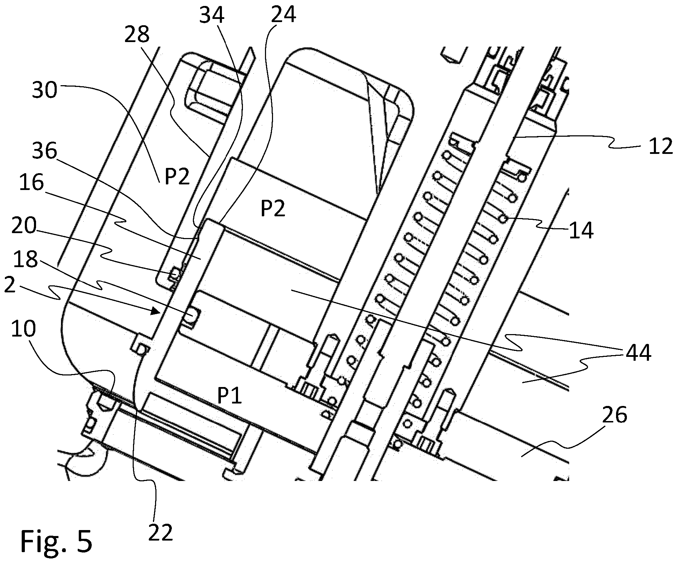

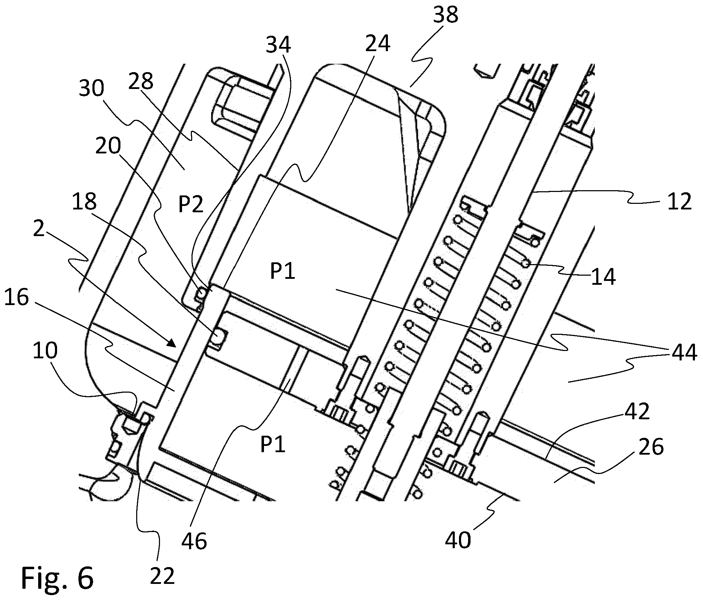

As mentioned above, the valve 1 comprises the valve plug 2. The valve 1 also comprises a valve seat 10. The valve plug 2 and the valve seat 10 are both located within the valve body 4. The valve plug 2 is linearly movable within the valve body 4 relative to the valve seat 10 to control liquid flow from the inlet 6 to the outlet 8. In particular, the valve plug 2 is movable forwardly from the fully open position shown in Fig. 1 (and enlarged view in Fig. 4) to the closed position shown in Fig. 3 (and enlarged view in Fig. 6), and vice versa. In its closed position, the valve plug 2 is seated against the valve seat 10 such that no liquid (or only a leakage liquid) is allowed to flow from the inlet 6 to the outlet 8. The valve plug 2 can also be moved to positions between the fully open position and the fully closed position, for example to a 50 % open position shown in Fig. 2 (and enlarged view in Fig. 5), thereby allowing different flow rates to be passed through the valve body 4. As explained above, in the closed position, the valve plug 2 seals against the valve seat 10 within the valve body 4. In the fully open position and in any position between the closed position and the fully open position, the valve plug 2 is spaced apart from the valve seat 10, and the available cross-sectional area for liquid flow between the valve plug 2 and the valve seat 10 increases as the valve plug 2 is moved from the closed position towards the fully open position.

The valve plug 2 is here illustrated as being connected to one end of a valve stem 12. The opposite end of the valve stem 12, protruding out from the valve body 4, may be configured to receive a motorized actuator (not shown) which can cause the valve stem 12, and thus the connected valve plug 2, to selectively move towards and away from the valve seat 10. Actuators per se are well known, and the valve 1 of the present disclosure is not limited to be controlled by a specific actuator. For example, the actuator may comprise an engagement part which may push the valve stem 12 and thus the valve plug 2 towards the valve seat 10. A spring 14 located around the valve stem 12 may be biased to push the valve stem 12 and thereby the valve plug 2 in the opposite direction, i.e. in an opening direction. Thus, if no force is provided from the actuator to the valve stem 12, then the valve plug 2 may reach its fully open position. This is generally referred to as a "normally open" type valve.

The valve plug 2 comprises a circumferential wall portion 16. The circumferential wall portion 16 may suitably have a substantially cylindrical configuration, and may in particular have circular cross-sections for enabling appropriate sealing functionality, such as the sealing functions achieved in cooperation with the a first O-ring 18 and a second O-ring 20, which will be discussed in more detail later. As indicated with reference numerals in Figs. 4-6, the circumferential wall portion 16 has a front end 22 and a rear end 24. The rear end 24 is trailing the front end 22 in a forward movement of the valve plug 2, i.e. when the valve plug 2 is moving towards the valve seat 10. Thus, in general, it should be understood that in this disclosure, forward movements of the valve plug 2 reduce the distance between the valve plug 2 and the valve seat 10. Conversely, rearward movements of the valve plug 2 increase the distance between the valve plug 2 and the valve seat 10.

The valve 1 further comprises a first guide part 26 and a second guide part 28. Each one of the first guide part 26 and the second guide part 28 may suitably be stationary relative to the valve body 4. The circumferential wall portion 16 of the valve plug 2 encircles the first guide part 26, and the circumferential wall portion 16 is encircled by the second guide part 28. The valve plug 2, including its circumferential wall portion 16, is linearly movable relative to the guide parts 26, 28. The first O-ring 18 is a first sealing O-ring 18 and it is provided between the first guide part 26 and the encircling circumferential wall portion 16 of the valve plug 2. The second O-ring 20 is provided between the second guide part 28 and the encircled circumferential wall portion 16 of the valve plug 2.

As indicated in Figs. 1-3, liquid flowing between the inlet 6 and the valve plug 2 has an upstream pressure P1 and liquid flowing between the valve plug 2 and the outlet 8 has a downstream pressure P2. There is a pressure drop across the valve plug 2, so the downstream pressure P2 is lower than the upstream pressure P1.

The second O-ring 20 has an inactive non-sealing state in which the rear end 24 of the circumferential wall portion 16 is subjected to said downstream pressure P2. For example, in the fully open position shown in the enlarged view in Fig. 4, as well as in the 50 % open position shown in the enlarged view in Fig. 5, the second O-ring 20 is in said inactive non-sealing state. A volume 30 (indicated in Figs. 4-6) around the valve plug 2 will contain water that has passed from the inlet 6 through the valve plug 2 and which will thus have the downstream pressure P2. This downstream pressure P2 from said surrounding volume 30 will due to the inactive non-sealing state between the second O-ring 20 and the circumferential wall portion 16 be present also at the rear end 24 of the circumferential wall portion 16. In other words, when the second O-ring 20 is in the inactive non-sealing state, the rear end 24 of the circumferential wall portion 16 will be in fluid communication with said surrounding volume 30 via a gap between the second O-ring 20 and the circumferential wall portion 16.

The second O-ring 20 also has an active sealing state in which the second O-ring 20 provides a seal between the second guide part 28 and the encircled circumferential wall portion 16 and in which the rear end 24 of the circumferential wall portion 16 is subjected to said upstream pressure P1. In the closed position of the valve plug 2 shown in Figs. 3 and 6 the second O-ring 20 is in the active sealing state. In this active sealing state, there is no longer fluid communication between the rear end 24 of the circumferential wall portion 16 and said surrounding volume 30 via a gap between the second O-ring 20 and the circumferential wall portion 16. In this active sealing state, there is no such gap. As will be explained in more detail later, this now allows the rear end 24 of the circumferential wall portion 16 to be subjected to said upstream pressure P1.

As will also be explained in more detail later, the second O-ring 20 is in the inactive non-sealing state in any position of the valve plug 2 between the fully open position (Figs. 1 and 4) and a predefined intermediate position. When the valve plug 2 passes said predefined intermediate position in a forward movement of the valve plug 2, the second O-ring 20 is caused to the change to its active sealing state and remain in said active sealing state when the valve plug 2 is in the closed position. (Figs. 3 and 6).

Fig. 1 further illustrates that the valve 1 may be combined with other functionalities. In this example a flow meter 32 is provided and configured to measure the flow rate through the valve body 4. The flow meter 32 is here illustrated as being an ultrasonic flow meter. However, this is just one example, and it should be understood that other types of flow meters are also conceivable, such as for instance mechanical flow meters. In addition to, or instead of a flow metering functionality, the valve 1 may be combined with functionalities such as pressure regulating functionality, balancing functionality, etc. It should also be understood that in other examples the valve 1 may be provided just as a pure control valve, without any flow meter or other add-on functions.

With reference to the enlarged views in Figs. 4-6, an example is shown on how the valve may be configured to achieve the switching between the inactive non-sealing state and the active sealing state of the second O-ring 20.

Fig. 4 shows the valve plug 2 in its fully open position, and there is thus an open through flow between the valve plug 2 and the valve seat 10, via which liquid is allowed to pass from the inlet 6 to the outlet 8 of the valve body 4. As illustrated in Fig. 4, the rear end 24 of the circumferential wall portion 16 may have a larger diameter than the front end 22 of the circumferential wall portion 16. In this example the rear end 24 of the circumferential wall portion 16 is also thicker than the front end 22 of the circumferential wall portion 16. Adjacent to the rear end 24 there may be a rear area 34 of the circumferential wall portion 16. As illustrated in Fig. 4, this rear area 34 is facing radially outwardly and has an enlarged diameter. In this fully open position of the valve plug 2, the rear area 34 is far away from the second O-ring 20, which may be held relatively relaxed in e.g. a circular groove in the second guide part 28. As illustrated, the circular groove may, for example, be located adjacent to a front end of the second guide part 28. When desired to close the valve 1, i.e. to bring the valve plug 2 to its closed position, the valve plug 2 is moved forwardly. In that forward movement, gradually approaching the valve seat 10, it will pass the 50% open position illustrated in Fig. 5. As can be seen in Fig. 5 there is a distance between the rear area 34 of the circumferential wall portion 16 and the second O-ring 20. With further reference to Fig. 5, the circumferential wall portion 16 may suitably comprise a tapered 36 area which tapers radially from said rear area 34 in the forwards direction. This tapered area 36 may function as a "ramp", assisting the second O-ring 20 to conveniently come into sealing contact with the radially outwardly facing rear area 34 of the circumferential wall portion 16. Thus, it can be understood that, in at least some examples, in a forward movement of the valve plug 2, said predefined intermediate position of the valve plug 2 may be reached when the tapered area 36 contacts the second O-ring 20. As the valve plug 2 continues to move forward the second O-ring 20 will in due course come into sealing contact with the rear area 34, as illustrated in Fig. 6. Thus, the active sealing state of the second O-ring 20 is reached when the tapered area 36 has passed by the second O-ring 20 so that the rear area 34 comes into contact with the second O-ring 20.

From this example, it can be understood that said predefined intermediate position of the valve plug 2 may suitably be located nearer to the closed position than the fully open position of the valve plug 2. For example, with respect to a full stroke of the valve plug 2 (in this example moving from the fully open position in Fig. 4 to the fully closed position in Fig. 6) the second O-ring 20 may be in the inactive non-sealing state for at least 90% of the full stroke, and in the active sealing state for at most 10% of the full stroke.

With reference to Figs. 3 and 6, the second guide part 28 may form part of a cap structure 38 within which the circumferential wall portion 16 may be movable. The first guide part 26 has a front side 40 and a rear side 42 (see Fig. 6). The cap structure 38 and the rear side 42 of the first guide part 26 define a volume 44 in which the upstream pressure P1 is present in the closed state of the valve plug 2 (see Fig. 6). As can be further seen in Fig. 6, the first guide part 26 is provided with a first bore 46 through the first guide part 26 such that the front side 40 and the rear side 42 of the first guide part 26 are in fluid communication with each other. This first bore 46 is also clearly visible in Fig. 3. Furthermore, in Fig. 3, you can also see that the valve plug 2 may have a front wall portion 48, which is arranged forwardly of the first guide part 26. The front wall portion 48 is circumferentially defined by the circumferential wall portion 16 of the valve plug 2. A variable volume chamber 50 is present between the front wall portion 48 and the first guide part 26 (see Fig. 3). In the retracted fully open position of the valve plug 2 in Fig. 1, said variable volume chamber 50 is very small (or may even be substantially zero, if the front wall portion 48 is configured to come into contact with the first guide part 26 when the valve plug 2 is in the fully open position). In Fig. 2 (50 % open position of the valve plug 2), the variable volume chamber 50 is larger, and in Fig. 3 (closed position of the valve plug 2), the variable volume chamber 50 is even larger.

The front wall portion 48 may be provided with at least one second bore 52 such that a front side 54 and a rear side 56 of the front wall portion 48 may be in fluid communication with each other (the front side 54 and rear side 56 has only been indicated in Fig. 3).

As illustrated in Figs. 1-3 there may be more the one second bore 52, such as two second bores 52 that fluidly interconnect the front side 54 with the rear side 56 of the front wall portion 48 (i.e. fluidly interconnecting the volume between the inlet 6 and the valve plug 2 with the variable volume chamber 50). Although providing a second bore 52 through the front wall portion 48 is a convenient way to achieve such fluid communication, other examples are also conceivable, such providing a flow passage via the valve stem 12 to fluidly interconnect the volume in front of the front wall portion 48 with the variable volume chamber 50.

With further reference to Fig. 3 and 6, in the closed position of the valve plug 2, the second O-ring 20 is in its active sealing state. This means that there will be no liquid communication between the following two volumes:
a) the surrounding volume 30 around the valve plug 2 that contains water that has passed from the inlet 6 through the valve plug 2 (and that has the downstream pressure P2), and
b) the volume 44 defined by the cap structure 38 and the rear side 42 of the first guide part 26.

Therefore, due to the liquid communication between said volume 44 defined by the cap structure 38 and the rear side 42 of the first guide part 26 on the one hand and the variable volume chamber 50 on the other hand (via the first bore 46) and further due to the liquid communication between the variable volume chamber 50 on the one hand and the volume present between the inlet 6 and the valve plug 2 on the other hand (via the at least one second bore 52) the upstream pressure P1 will be present throughout these three volumes.

Thus, in the closed state of the valve plug 2 (Figs. 3 and 6), the upstream pressure P1 at the front side 54 of the front wall portion 48 of the valve plug 2, will exert an opening force on the valve plug 2, whereas the upstream pressure P1 of the liquid in the variable volume chamber 50 will instead exert a closing force on the rear side 56 of the front wall portion 48 of the valve plug 2. Additionally, the upstream pressure P1 of the liquid present in the volume 44 defined by the cap structure 38 and the rear side 42 of the first guide part 26 will also exert a closing force; this closing force will be on the rear end 24 of the circumferential wall portion 16 of the valve plug 2. Thus, by adding the rear end 24 of the circumferential wall portion 16 as an additional area on which the upstream pressure P1 may act, the closing force of a connected actuator does not need to be as high as if the upstream pressure P1 would only be balanced by the liquid acting on the rear side 56 of the front wall portion 48. Thus, the added area presented by the rear end 24 of the circumferential wall portion 16 is beneficial as it contributes well to maintaining the valve plug 2 in the closed position.

Furthermore, as illustrated in this example, the rear end 24 of the circumferential wall portion 16 may suitably have a larger diameter than the front end 22 of the circumferential wall portion 16. This may result in that, in the closed position of the valve plug 2, liquid having the upstream pressure P1 and urging the valve plug 2 with a forwardly directed force (i.e. urging the valve plug 2 to maintain the valve plug 2 in its closed position) will act on a larger area than liquid having the upstream pressure P1 and urging the valve plug 2 to instead move towards an open position. Thus, the enlarged area results in a net closing force provided by the upstream pressure P1, which further facilitates maintaining the valve plug 2 in the closed position.

As should be understood, having the second O-ring 20 in the active sealing state when the valve plug 2 is in its closed position provides a great advantage. However, as should also be understood, if the second O-ring 20 would constantly (throughout a full stroke length) be in sealing contact with the circumferential wall portion 16, then that would result in unnecessary additional friction when the valve plug 2 is moving. Therefore, it is also advantageous to have the second O-ring 20 in the inactive non-sealing state for a major part of the full stroke length of the valve plug 2. However, when the second O-ring 20 is in the inactive non-sealing state (such as shown in the fully open position of the valve plug 2 in Figs. 1 and 4, and in the 50% open position in Figs. 2 and 5), there is liquid communication between the large surrounding volume 30 and the volume 44 defined by the cap structure 38 and the rear side 42 of the first guide part 26. In these positions of the valve plug 2, the liquid present in the volume 44 defined by the cap structure 38 and the rear side 42 of the first guide part 26 will be at said downstream pressure P2. By designing the second bores 52 to have greater diameter than the first bore 50, the liquid present in the variable volume chamber 50 will still be at said upstream pressure P1, providing a certain degree of pressure balance across the front wall portion 48 of the valve plug 2, thus allowing movements of the valve plug 2 to be controlled conveniently.

The first O-ring 18 and the second O-ring 20 may be of any suitable material. For example, the second O-ring 20 may comprise an elastomeric material such as rubber or polyurethane, wherein the circumferential wall portion 16 of the valve plug 2 causes an inner perimeter of the second O-ring 20 to expand radially when the valve plug 2 passes said intermediate position in a forward movement.

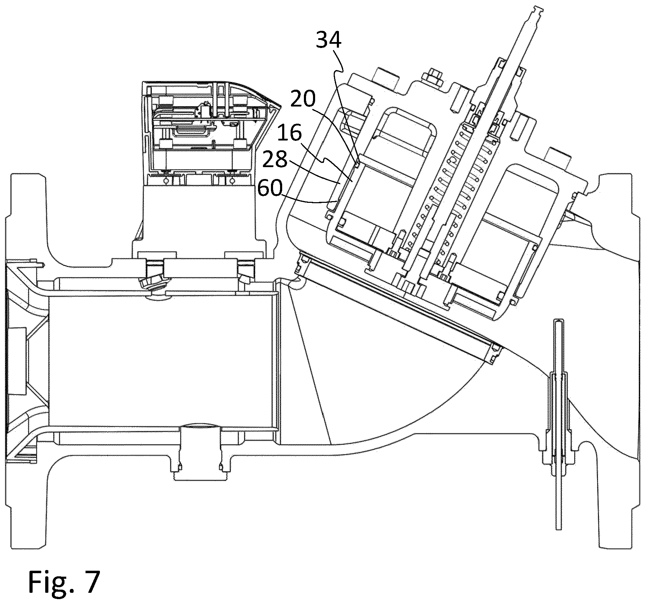

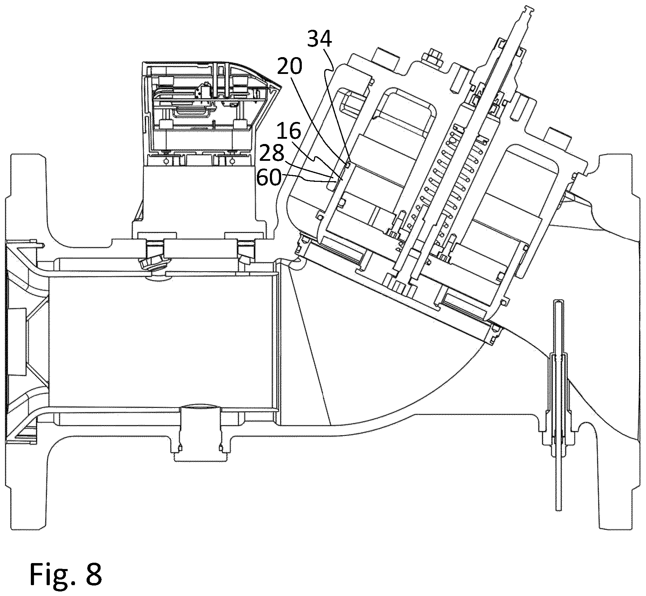

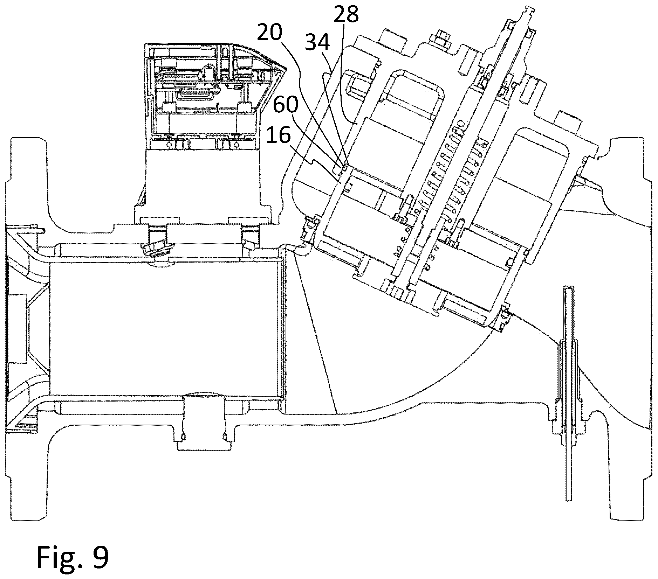

Figs. 7-9 show another exemplary embodiment. Figs. 7-9 largely correspond to Figs. 1-3, respectively. However, in the exemplary embodiment of Figs. 7-9, the second O-ring 20 is instead provided in the rear area 34 of the circumferential wall portion 16, wherein the rear area 34 has an enlarged diameter. In such case, the rear area 34 may suitable be provided with a circumferential groove in which the second O-ring 20 is fitted. In a forward movement of the valve plug, the second O-ring 20 may, near the end of the forward movement, come into contact with a radially inwardly projecting portion 60 of the second guide part 28 (such a radially inwardly projecting portion 60 may suitably be provided at the front end of the second guide part 28 presenting a reduced inner diameter of the second guide part 28). When the second O-ring 20 comes into contact with the radially inwardly projecting portion 60 of the second guide part 28, the active sealing state can be obtained.

## Claims

1. A valve, comprising:
- a valve body having an inlet and an outlet,
- a valve seat,
- a valve plug which is linearly movable within the valve body relative to the valve seat to control liquid flow from the inlet to the outlet, wherein the valve plug comprises a circumferential wall portion which has a front end and a rear end, wherein the rear end is trailing the front end in a forward movement of the valve plug, wherein the valve plug is movable between:
a closed position in which the valve plug is seated against the valve seat such that no liquid, or only a leakage liquid, is allowed to flow from the inlet to the outlet, and
a fully open position,
wherein forward movements of the valve plug reduce its distance to the valve seat,
and wherein rearward movements of the valve plug increase its distance to the valve seat, and
wherein liquid flowing between the inlet and the valve plug has an upstream pressure (P1) and liquid flowing between the valve plug and the outlet has a downstream pressure (P2) which is lower than the upstream pressure (P1),
wherein the valve further comprises:
- a first guide part and a second guide part, wherein said circumferential wall portion of the valve plug encircles the first guide part and is encircled by the second guide part, wherein the valve plug, including its circumferential wall portion, is linearly movable relative to the guide parts,
- a first sealing O-ring provided between the first guide part and the encircling circumferential wall portion of the valve plug,
- a second O-ring provided between the second guide part and the encircled circumferential wall portion of the valve plug,
wherein the second O-ring has an inactive non-sealing state in which the rear end of the circumferential wall portion is subjected to said downstream pressure (P2), and an active sealing state in which the second O-ring provides a seal between the second guide part and the encircled circumferential wall portion and in which the rear end of the circumferential wall portion is subjected to said upstream pressure (P1),
wherein the second O-ring is in the inactive non-sealing state in any position of the valve plug between the fully open position and a predefined intermediate position, wherein when the valve plug passes said predefined intermediate position in a forward movement of the valve plug, the second O-ring is caused to change to its active sealing state and remain in said active sealing state when the valve plug is in said closed position.

2. The valve as claimed in claim 1, wherein said predefined intermediate position of the valve plug is located closer to the closed position than the fully open position of the valve plug.

3. The valve as claimed in any one of claims 1-2, wherein, with respect to a full stroke of the valve plug, i.e. from the fully open position to the closed position, the second O-ring is in said inactive non-sealing state for at least 90% of the full stroke, and in said active sealing state for at most 10 % of the full stroke.

4. The valve as claimed in any one of claims 1-3, wherein the rear end of the circumferential wall portion has a larger diameter than the front end of the circumferential wall portion.

5. The valve as claimed in any one of claims 1-4, wherein a rear area of the circumferential wall portion is facing radially outwardly and is located adjacent to the rear end of the circumferential wall portion, wherein said rear area of the circumferential wall portion has an enlarged diameter, wherein in said active sealing state, the second O-ring seals against said rear area.

6. The valve as claimed in claim 5, wherein the circumferential wall portion comprises a tapered area which tapers radially from said rear area in the forwards direction, wherein, in a forward movement of the valve plug, said predefined intermediate position of the valve plug is reached when the tapered area contacts the second O-ring, wherein said active sealing state of the second O-ring is reached when the tapered area has passed by the second O-ring so that the rear area comes into contact with the second O-ring.

7. The valve as claimed in any one of claims 1-6, wherein the second guide part forms part of a cap structure within which the circumferential wall portion is movable, wherein the cap structure and a rear side of the first guide part define a volume in which said upstream pressure (P1) is present in the closed state of the valve plug.

8. The valve as claimed in any one of claims 1-7, wherein the first guide part is provided with a first bore through the first guide part such that a front side and a rear side of the first guide part are in fluid communication with each other.

9. The valve as claimed in claim 8, wherein the valve plug has a front wall portion arranged forwardly of the first guide part, wherein the front wall portion is circumferentially defined by the circumferential wall portion of the valve plug, wherein a variable volume chamber is present between the front wall portion and the first guide part, wherein the front wall portion is provided with at least one second bore such that a front side and a rear side of the front wall portion are in fluid communication with each other.

10. The valve as claimed in claim 9, wherein the diameter of said at least one second bore is greater than the diameter of the first bore.

11. The valve as claimed in any one of claims 9-10, wherein the front wall portion of the valve plug is provided with at least two second bores that provide fluid communication between the front side and rear side of the front wall portion, wherein the diameter of each one of the second bores is greater than the diameter of the first bore.

12. The valve as claimed in any one of claims 1-11, wherein at least one of the first guide part and the second guide part is stationary.

13. The valve as claimed in any one of claims 1-12, wherein the second O-ring is provided in a circular groove of the second guide part.

14. The valve as claimed in claim 13, wherein said circular groove is located adjacent to a front end of the second guide part.

15. The valve as claimed in any one of claims 1-14, wherein said second O-ring comprise an elastomeric material such as rubber or polyurethane, wherein the circumferential wall portion of the valve plug causes an inner perimeter of the second O-ring to expand radially when the valve plug passes said intermediate position in a forward movement.
